# FASCICULE DE BREVET EUROPEEN

(11) **EP 4 334 173 B1**
(45) Date de publication et mention de la délivrance du brevet: **07.05.2025**
(21) Numéro de dépôt: 22717641.9
(22) Date de dépôt: 29.03.2022
(51) Int. Cl.: B60Q 1/04

(54) **PROJECTEUR AVEC PATTE D'ANCRAGE FRANGIBLE POURVUE D'UN TROU OBLONG D'INDEXAGE**
SCHEINWERFER MIT ZERBRECHLICHEM BEFESTIGUNGSLASCHE, DIE MIT EINEM LANGLOCH ZUR INDEXIERUNG VERSEHEN IST
HEADLAMP WITH FRANGIBLE FIXATION BRACKET PROVIDED WITH AN ELONGATED INDEXING HOLE

(30) Priorité: 06.05.2021 FR 2104787
(43) Date de publication de la demande: 13.03.2024
(73) Titulaire: Stellantis Auto SAS, 78300 Poissy (FR)
(72) Inventeur: VIDEIRA, Filipe, 78140 VELIZY VILLACOUBLAY (FR)
(74) Mandataire: ESIP
(86) Numéro de dépôt international: PCT/FR2022/050580
(87) Numéro de publication internationale: WO 2022/234198

(56) Documents cités:
- EP-A1- 3 508 377
- EP-B1- 3 412 506
- CN-B- 103 802 721
- FR-A1- 3 086 227
- US-A1- 2016 311 361
- US-A1- 2019 077 297

## Description

### [Domaine technique]

La présente invention concerne d'une manière générale le domaine des projecteurs pour véhicules automobiles, de l'éclairage et/ou de la signalisation lumineuse des véhicules automobiles. Elle vise en particulier un boîtier d'un tel projecteur avant.

### [Technique antérieure]

Un projecteur de véhicule automobile comporte classiquement un boîtier comprenant un corps principal creux recevant au moins un module lumineux et étant refermé par une glace extérieure de couverture.

Le montage d'un tel projecteur sur la structure de caisse du véhicule est généralement assuré par l'intermédiaire d'au moins :
- une patte d'ancrage arrière saillant selon un plan moyen horizontal à l'arrière dudit corps creux du boîtier et destinées à être fixée sur un premier élément structurel du véhicule tel qu'une aile latérale avant, et
- une patte d'ancrage avant saillant également selon un plan moyen horizontal du côté interne dudit corps creux et destinées à être fixée sur un deuxième élément structurel du véhicule tel que l'armature de pare-choc.

De manière classique, ces pattes d'ancrage présentent chacune un perçage destiné à permettre leur fixation par vissage sur l'élément structurel correspondant de la caisse du véhicule.

Afin de faciliter les opérations de vissage des pattes d'ancrage du projecteur sur la structure de caisse et de maîtriser correctement les jeux et affleurements avec les éléments environnants du véhicule, il est connu de prévoir sur ces pattes d'ancrage des moyens d'indexage maintenant de manière isostatique ce projecteur dans sa position de montage.

La patte d'ancrage arrière est ainsi pourvue classiquement de moyens d'indexage anti-translation par emboitement selon un axe vertical constitués par exemple par un pion saillant verticalement depuis sa face inférieure et prévu pour coopérer par emboitement avec un orifice ménagé sur le premier élément structurel du véhicule.

La patte d'ancrage avant est quant à elle pourvue classiquement d'un trou oblong d'indexage anti-rotation orienté suivant une direction radiale audit axe vertical et prévu pour être traversé par un pion saillant verticalement vers le haut depuis le deuxième élément structurel du véhicule et de diamètre correspondant à la largeur de ce trou oblong.

Un tel agencement des moyens d'indexage permet d'absorber les dispersions dimensionnelles entre les deux éléments structurels du véhicule du fait des tolérances normales de fabrication, tout en assurant un positionnement parfaitement isostatique du projecteur (chaque degré de mobilité n'étant supprimé qu'une seule fois de sorte à éviter l'apparition de frottements générateurs de bruits parasites entre ces pattes et les éléments sur lesquels elles sont fixées) et en optimisant le jeu latéral résiduel entre ce projecteur et la calandre du véhicule.

Par ailleurs, afin de limiter les risques de blessures au bassin et/ou aux parties supérieures des jambes (zones fémur) d'un piéton en cas de choc frontal avec l'une des portions latérales avant du véhicule, la patte d'ancrage avant doit présenter également une zone frangible apte à se rompre lors de la survenance d'un tel choc de sorte à provoquer l'enfoncement du projecteur vers l'arrière et en direction du compartiment moteur du véhicule.

La présence d'une telle zone frangible entraine une réduction importante de la rigidité de cette patte d'ancrage avant qui entraine l'apparition, lors des phases de roulage et du fait du poids relativement important du projecteur, de phénomènes vibratoires en flexion entrainant un effet de scintillement optique sur la route.

En outre, l'état de la technique est connu du document US2019077297A1.

### [Exposé de l'invention]

La présente invention vise donc à améliorer la situation.

Elle propose à cet effet un boîtier de projecteur pour véhicule automobile selon la revendication 1.

La conformation particulière de la patte d'ancrage du boîtier avant permet de préserver un indexage du projecteur optimisant le jeu latéral résiduel entre le projecteur et la calandre du véhicule, tout en évitant l'apparition de phénomènes vibratoires en flexion au niveau de cette patte du fait de l'orientation verticale de sa zone de liaison frangible avec le corps principal de ce boîtier.

Selon des caractéristiques préférées dudit boîtier de projecteur selon l'invention :
- ladite zone de liaison frangible verticale est constituée par une pluralité d'appendices de liaison étagés de manière espacée les uns au dessus des autres en étant séparés par des trous d'amorce ;
- le perçage de fixation de ladite patte d'ancrage avant est ménagé dans sa partie distale horizontale ;
- ladite patte d'ancrage avant comporte au moins une nervure de soutènement en forme d'équerre s'étendant selon un plan longitudinal vertical entre la face inférieure de sa partie distale horizontale et la face arrière de sa partie proximale verticale ;
- ladite patte d'ancrage arrière ainsi que les parties proximale verticale et distale horizontale de ladite patte d'ancrage avant sont pourvues sur au moins l'une de leurs faces d'un réseau de nervures de rigidification ;
- lesdits moyens d'indexage anti-translation comportent un pion s'étendant verticalement depuis la face inférieure de ladite patte d'ancrage arrière et prévu pour coopérer par emboitement avec un orifice ménagé dans un élément structurel dudit véhicule ;
- la branche distale de ladite patte d'ancrage inférieure est reliée à la branche proximale de cette patte d'ancrage inférieure par une zone de liaison frangible verticale configurée pour rompre sous une contrainte longitudinale de cisaillement prédéterminée.

L'invention vise également sous un second aspect, un projecteur pour véhicule automobile comportant un tel boîtier comprenant un corps principal creux ouvert, au moins un module lumineux logé dans ledit corps, et une glace extérieure de couverture refermant ledit corps.

L'invention vise enfin sous un troisième aspect un véhicule automobile comportant un tel projecteur.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective d'un projecteur de véhicule automobile selon l'invention ;
[Fig 2] est une vue en perspective sous un autre angle du boîtier du projecteur de la figure 1 ;
[Fig 3] représente un agrandissement en perspective de la patte d'ancrage arrière du boîtier de la figure 2 ;
[Fig 4] est un agrandissement en perspective de la zone de fixation de la patte d'ancrage avant du boîtier de la figure 2 sur l'armature de pare-chocs avant d'un véhicule ;
[Fig 5] représente un agrandissement vu de dessus de la patte d'ancrage avant du boîtier de la figure 2 ;
[Fig 6] représente un agrandissement vu de face de la patte d'ancrage avant du boîtier de la figure 2 ; et
[Fig 7] représente un agrandissement en perspective vu de dessous de la patte d'ancrage avant du boîtier de la figure 2.

### [Description détaillée]

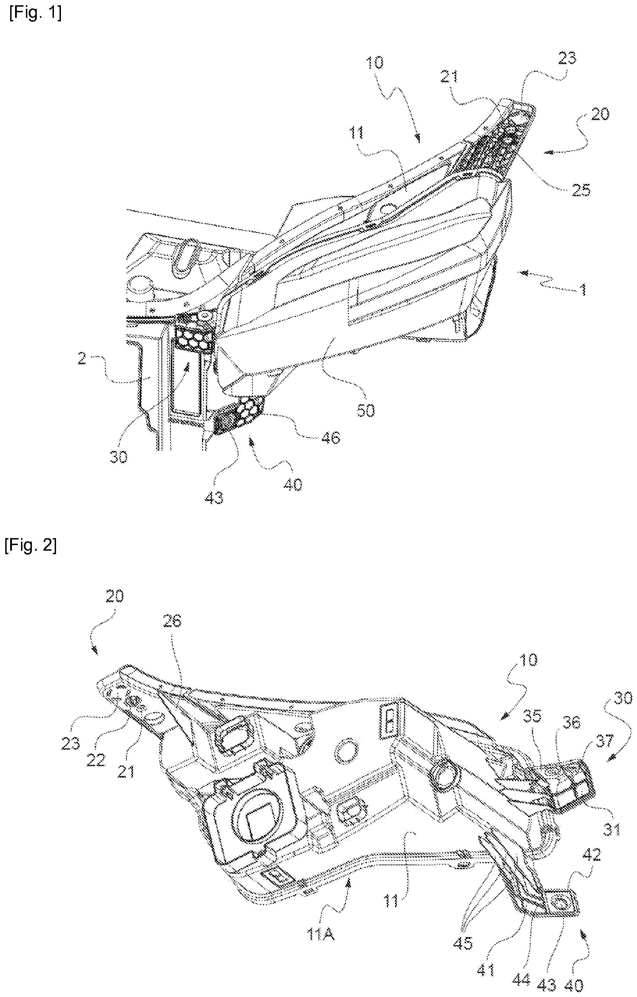

La figure 1 représente un projecteur 1 d'un véhicule automobile selon l'invention destiné à être monté sur la structure de caisse de ce véhicule en s'intégrant aux contours des pièces de carrosserie adjacentes et à ceux du pare-choc.

Dans la description qui va suivre et par convention, les termes « avant », « arrière », « inférieur », « supérieur », « longitudinal » et « transversal » seront définis par rapport à la position de montage de ce projecteur 1 sur le véhicule.

Les termes « externe » et « interne » seront quant à eux utilisés pour définir la position relative d'un élément par référence à l'axe longitudinal du véhicule. L'élément le plus proche de cet axe sera ainsi qualifié d'interne par opposition à l'autre élément plus éloigné de ce même axe qui sera quant à lui qualifié d'externe.

Le projecteur 1 comporte un boîtier 10 comprenant un corps creux principal 11 présentant une ouverture 11A et renfermant un ou plusieurs modules lumineux, tel que notamment un module d'éclairage assurant les fonctions photométriques feu de croisement (couramment désigné sous le terme anglosaxon « low beam ») et feu de route (couramment désigné sous le terme anglosaxon « high beam »), ou encore un module de signalisation du type lanterne et/ou clignotant.

Ce corps principal creux 11 est refermé par une glace extérieure de couverture transparente 50, venue avantageusement de moulage d'une seule pièce à partir d'un polymère synthétique transparent tel que le polycarbonate (PC) ou le poly-méthacrylate de méthyle (PMMA), et rapportée fixement sur le pourtour périphérique de son ouverture 11A par soudure laser de sorte à assurer une parfaite étanchéité.

Représenté seul sur la figure 2, le boîtier 10 comporte également trois pattes d'ancrage 20, 30, 40 saillant à l'extérieur du corps principal 11 et permettant le montage du projecteur 1 sur la structure de caisse du véhicule.

En l'espèce, ce boîtier 10 comprend :
- une patte d'ancrage arrière 20 saillant selon un plan moyen horizontal à l'arrière dudit corps 11 et suivant une direction sensiblement longitudinale ;
- une patte d'ancrage avant 30 saillant latéralement du côté interne du corps principal 11 ; et
- une patte d'ancrage inférieure 40 saillant en dessous de ce corps principal 11.

Ces trois pattes d'ancrage 20, 30, 40 sont venues de matière avec le corps 11 du boîtier 10 par moulage à partir d'un polymère thermoplastique approprié tel que l'acrylonitrile butadiène styrène (ABS).

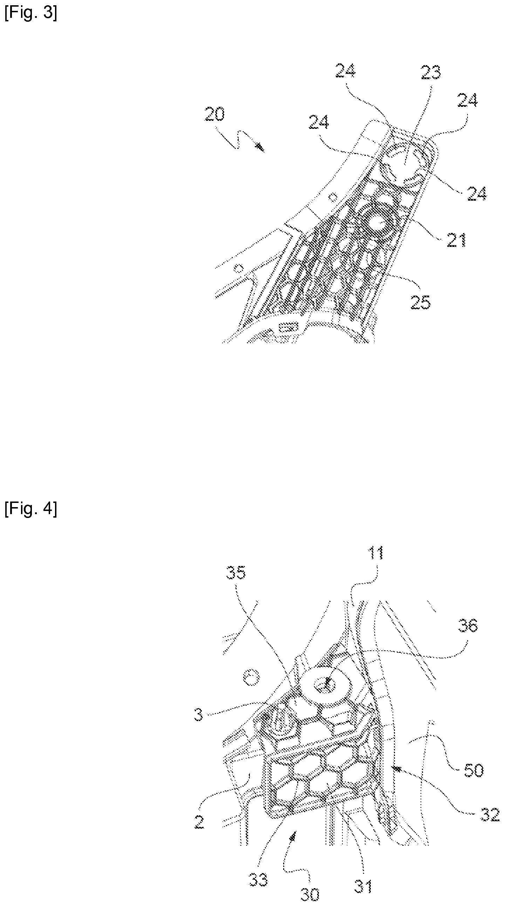

Représentée de manière agrandie sur la figure 3, la patte d'ancrage arrière 20 est pourvue d'un perçage 21 destiné à permettre sa fixation par vissage sur une aile latérale correspondante (non représentée) de la structure du véhicule et par l'intermédiaire d'une vis associée à d'une rondelle d'entretoise comme cela est bien connu de l'art antérieur.

Cette patte d'ancrage arrière 20 présente également des moyens d'indexage anti-translation par emboitement selon un axe vertical, constitués en l'espèce par un pion à section en croix 22 (visible sur la figure 2) s'étendant verticalement depuis sa face inférieure et prévu pour coopérer par emboitement avec un orifice (non représenté) ménagé dans ladite aile latérale.

La patte 20 comporte en outre, au niveau de son extrémité proximale de raccordement avec le corps principal 11 du boîtier 10, une ligne d'affaiblissement frangible (non visible sur les figures) configurée pour rompre lors de la survenance d'un choc avant de sorte à provoquer sa désolidarisation d'avec ce corps principal 11.

A proximité de son extrémité supérieure, cette patte 20 comprend par ailleurs une zone circulaire d'affaiblissement frangible 23, délimitée par quatre lumières 24 en arc de cercle et configurée pour rompre sous une contrainte verticale d'appui prédéterminée exercée par une butée du capot avant du véhicule en cas de choc entre un piéton et l'avant du véhicule, de sorte à permettre l'enfoncement de ce capot et l'absorption d'une partie de l'énergie de ce choc.

La face supérieure de la patte 20 est pourvue sur au moins la majeure partie de sa surface d'un réseau de nervures de rigidification en nid d'abeilles 25 destinées à augmenter sa rigidité mécanique.

Sa face inférieure est également pourvue d'une nervure de soutènement en forme d'équerre 26 s'étendant dans un plan longitudinal vertical et étant adossée à une paroi du corps principal 11 de ce boîtier 10.

Représentée de manière agrandie sur les figures 4 à 7, la patte d'ancrage avant 30, en forme de cornière, comprend une partie proximale 31 s'étendant selon un plan moyen transversal vertical et étant raccordée par l'un de ses bords latéraux au corps principal 11 via une zone de liaison frangible verticale 32 configurée pour rompre sous une contrainte longitudinale de cisaillement prédéterminée.

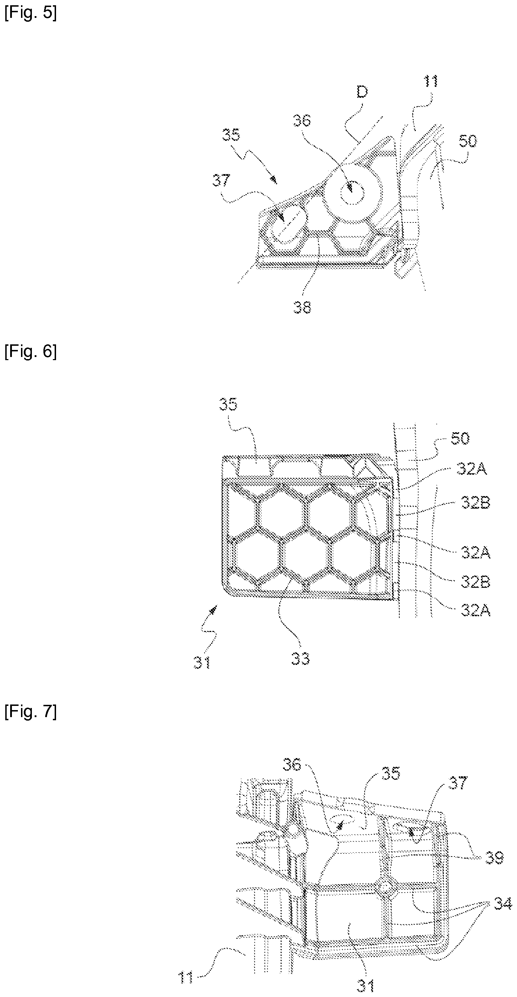

Tel qu'illustré par la figure 6, cette zone de liaison frangible 32 est ici constituée par une pluralité d'appendices de liaison 32A étagés de manière espacée les uns au dessus des autres en étant séparés par des trous d'amorce 32B.

La résistance mécanique au cisaillement longitudinal de cette zone de liaison frangible 32 pourra ainsi être facilement ajustée par retrait ou ajout de matière dans le moule d'injection servant à fabriquer le boîtier 10.

Selon une variante de réalisation non représentée, la zone de liaison frangible 32 peut être constituée par une ligne de striction présentant une épaisseur réduite.

Afin d'augmenter sa rigidité mécanique, la face avant de cette partie proximale verticale 31 de la patte 30 est pourvue sur l'ensemble de sa surface d'un réseau de nervures de rigidification en nid d'abeilles 33.

Toujours dans le but d'améliorer sa rigidité mécanique, la face arrière de cette partie proximale verticale 31 présente également un réseau de nervures de rigidification croisées 34.

La patte d'ancrage avant 30 comporte également une partie distale 35 s'étendant vers l'arrière et selon un plan moyen horizontal depuis le bord supérieur de la partie proximale 31.

En référence aux figures 4 et 5, cette partie distale horizontale 35 présente un perçage 36 destiné à permettre sa fixation par vissage sur l'armature de pare-chocs avant 2 du véhicule et par l'intermédiaire d'une vis associée à une rondelle d'entretoise.

La partie distale horizontale 35 de la patte 30 présente également des moyens de pré-maintien et d'indexage anti-rotation constitués par un trou oblong 37 orienté suivant une direction D radiale à l'axe vertical du pion 22 (voir figure 5) et prévu pour être traversé par un doigt 3 saillant verticalement vers le haut depuis l'armature de pare-chocs 2 et de diamètre correspondant à la largeur dudit trou oblong (voir figure 4).

Afin d'augmenter sa rigidité mécanique, la face supérieure de cette partie distale horizontale 35 est en outre pourvue d'un réseau de nervures de rigidification en nid d'abeilles 38 s'étendant sur l'ensemble de sa surface à l'exception du pourtour périphérique du perçage 36 destiné à recevoir une dite rondelle d'entretoise.

Tel qu'illustré sur la figure 7 et de sorte à éviter l'apparition, lors des phases de roulage et du fait du poids relativement important du projecteur 1, de phénomènes vibratoires en flexion au niveau de cette partie distale horizontale 35 de la patte 30, cette dernière comporte deux nervures de soutènement en forme d'équerre 39 s'étendant selon des plans longitudinaux verticaux parallèles entre la face inférieure de cette partie distale horizontale 35 et la face arrière de la partie proximale verticale 31.

Selon des variantes de réalisation non représentées, le nombre de ces nervures de soutènement peut varier en étant compris par exemple entre un et quatre.

Présentant une forme de L, la patte d'ancrage inférieure 40 s'étend suivant un plan moyen vertical parallèle à la direction D du trou oblong 37 de sorte à éviter les dispersions résiduelles qui seraient nuisibles à la bonne position du projecteur 1.

Tel qu'illustré sur la figure 2, cette patte d'ancrage inférieure 40 comporte une branche proximale 41 raccordée par son bord supérieur au corps principal 11 et orientée verticalement vers le bas, ainsi qu'une branche distale 42 orientée horizontalement et pourvue d'un perçage 43 destiné à permettre sa fixation par vissage sur l'armature de pare-chocs 2 du véhicule et par l'intermédiaire d'une vis associée à une rondelle d'entretoise.

La branche distale 42 de cette patte d'ancrage inférieure 40 est en outre reliée à sa branche proximale 41 par une zone de liaison frangible verticale 44 configurée pour rompre sous une contrainte longitudinale de cisaillement prédéterminée et constituée en l'espèce par une ligne de striction verticale présentant une épaisseur réduite.

Afin d'augmenter sa rigidité mécanique, la face arrière de la branche proximale 41 est pourvue de trois nervures de soutènement en forme d'équerre 45 s'étendant parallèlement dans des plans longitudinaux verticaux et étant adossées à une paroi du corps principal 11 de ce boîtier 10.

Selon des variantes de réalisation non représentées, le nombre de ces nervures de soutènement peut varier en étant compris par exemple entre un et quatre.

Enfin et dans le but d'améliorer sa rigidité, la face avant de cette patte d'ancrage inférieure 40 est pourvue d'un réseau de nervures en nid d'abeilles 46 s'étendant sur l'ensemble de sa surface à l'exception du pourtour périphérique du perçage 43 destiné à recevoir la rondelle d'entretoise.

## Revendications

1. Boîtier (10) de projecteur (1) pour véhicule automobile comportant un corps principal creux (11) apte à recevoir au moins un module lumineux et destiné à être refermé par une glace extérieure de couverture (50), une patte d'ancrage arrière (20) saillant selon un plan moyen horizontal à l'arrière dudit corps (11) et présentant un perçage (21) pour sa fixation par vissage à un premier élément structurel dudit véhicule ainsi que des moyens d'indexage anti-translation par emboitement selon un axe vertical (22), et une patte d'ancrage avant frangible (30) saillant dudit corps (11), du côté dit interne de ce corps en référence à l'axe longitudinal du véhicule, et présentant également un perçage (36) pour sa fixation par vissage à un second élément structurel (2) dudit véhicule ladite patte d'ancrage avant (30), en forme de cornière, comprenant une partie proximale (31) s'étendant selon un plan moyen transversal vertical et étant raccordée par l'un de ses bords latéraux audit corps (11) via une zone de liaison frangible (32) configurée pour rompre sous une contrainte longitudinale de cisaillement prédéterminée, ainsi qu'une partie distale (35) s'étendant vers l'arrière selon un plan moyen horizontal depuis le bord supérieur de ladite partie proximale (31); ce boitier de projecteur comportant de plus une patte d'ancrage inférieure;
le boîtier de projecteur étant **caractérisé en ce que** ladite patte d'ancrage avant frangible (30) présente dans sa partie distale (35) un trou oblong d'indexage anti-rotation (37) s'étendant horizontalement en étant orienté suivant une direction radiale (D) audit axe vertical;
**en ce que** la zone de liaison frangible (32) de la patte d'ancrage avant (30) est une zone de liaison frangible verticale;
et **en ce que** la patte d'ancrage inférieure (40) est en forme de L (40) saillant en dessous dudit corps selon un plan moyen vertical parallèle à ladite direction radiale (D) du trou oblong d'indexage (37), cette patte d'ancrage inférieure (40) comportant une branche proximale (41) d'orientation verticale raccordée par son bord supérieur audit corps (11) ainsi qu'une branche distale (42) orientée horizontalement et pourvue d'un perçage (43) destiné à permettre sa fixation par vissage sur un élément structurel dudit véhicule.

2. Boîtier (10) de projecteur (1) selon la revendication 1, **caractérisé en ce que** ladite zone de liaison frangible verticale (32) est constituée par une pluralité d'appendices de liaison (32A) étagés de manière espacée les uns au dessus des autres en étant séparés par des trous d'amorce (32B).

3. Boîtier (10) de projecteur (1) selon l'une des
revendications 1 ou 2, **caractérisé en ce que** le perçage de fixation (36) de ladite patte d'ancrage avant (30) est ménagé dans sa partie distale horizontale (35).

4. Boîtier (10) de projecteur (1) selon l'une des
revendications 1 à 3, **caractérisé en ce que** ladite patte d'ancrage avant (30) comporte au moins une nervure de soutènement en forme d'équerre (39) s'étendant selon un plan longitudinal vertical entre la face inférieure de sa partie distale horizontale (35) et la face arrière de sa partie proximale verticale (31).

5. Boîtier (10) de projecteur (1) selon l'une des
revendications 1 à 4, **caractérisé en ce que** ladite patte d'ancrage arrière (20) ainsi que les parties proximale verticale (31) et distale horizontale (35) de ladite patte d'ancrage avant (30) sont pourvues sur au moins l'une de leurs faces d'un réseau de nervures de rigidification (25, 33, 34, 38).

6. Boîtier (10) de projecteur (1) selon l'une des
revendications 1 à 5, **caractérisé en ce que** lesdits moyens d'indexage anti-translation comportent un pion (22) s'étendant verticalement depuis la face inférieure de ladite patte d'ancrage arrière (20) et prévu pour coopérer par emboitement avec un orifice ménagé dans un élément structurel dudit véhicule.

7. Boîtier (10) de projecteur (1) selon l'une des
revendications précédentes, **caractérisé en ce que** la branche distale (42) de ladite patte d'ancrage inférieure (40) est reliée à la branche proximale (41) de cette patte d'ancrage inférieure (40) par une zone de liaison frangible verticale (44) configurée pour rompre sous une contrainte longitudinale de cisaillement prédéterminée.

8. Projecteur (1) pour véhicule automobile, comportant un boîtier (10) comprenant un corps principal creux ouvert (11), au moins un module lumineux logé dans ledit corps (11), et une glace extérieure de couverture (50) refermant ledit corps ; **caractérisé en ce que** ledit boîtier est conforme à l'une des revendications 1 à 7.

9. Véhicule automobile **caractérisé en ce qu'**il comporte au moins un projecteur (1) conforme à la revendication 8.

## Patentansprüche

1. Gehäuse (10) eines Scheinwerfers (1) für ein Kraftfahrzeug, bestehend aus einem hohlen Hauptkörper (11), der mindestens ein Lichtmodul aufnehmen kann und durch ein äußeres Abdeckglas (50) verschlossen werden soll, einer hinteren Verankerungslasche (20), die entlang einer horizontalen Mittelebene an der Rückseite des Körpers (11) hervorsteht und eine Bohrung (21) für ihre Befestigung durch Verschrauben an einem ersten Strukturelement des Fahrzeugs sowie eine Anti-Translations-Indexierung durch Verriegelung entlang einer vertikalen Achse (22) aufweist, und einer abbrechbaren vorderen Verankerungslasche (30), die vom Körper (11) an der sogenannten Innenseite dieses Körpers in Bezug auf die Längsachse des Fahrzeugs hervorsteht und ebenfalls eine Bohrung (36) für ihre Befestigung durch Verschrauben an einem zweiten Strukturelement (2) des Fahrzeugs aufweist, wobei die vordere Verankerungslasche (30) in Form eines Winkeleisens einen proximalen Teil (31) aufweist, der sich entlang einer vertikalen Quermittelebene erstreckt und mit einer seiner Seitenkanten über eine vertikale eine zerbrechliche Verbindungszone (32), die so konfiguriert ist, dass sie unter einer vorbestimmten Längsscherspannung bricht, sowie einen distalen Abschnitt (35), der sich entlang einer horizontalen Mittelebene von der Oberkante des proximalen Abschnitts (31) nach hinten erstreckt, wobei dieses Projektorgehäuse außerdem eine untere Verankerungslasche umfasst; Dieses Projektorgehäuse umfasst auch eine untere Verankerungshalterung. wobei das Projektorgehäuse **dadurch gekennzeichnet ist, dass** die zerbrechliche vordere Verankerungslasche (30) in ihrem distalen Teil (35) ein längliches Antirotations-Indexierungsloch (37) aufweist, das horizontal verläuft und in einer radialen Richtung (D) zur vertikalen Achse ausgerichtet ist; und dass die untere Verankerungslasche (40) L-förmig ist (40) und unter dem Körper entlang einer vertikalen Mittelebene hervorsteht, die parallel zur radialen Richtung (D) des länglichen Indexierungslochs (37) ist, wobei diese untere Verankerungslasche (40) einen proximalen Zweig (41) vertikaler Ausrichtung umfasst, der durch seine Oberkante mit dem Körper (11) verbunden ist, sowie einen distalen Zweig (42), der horizontal ausgerichtet ist und mit einer Bohrung (43) versehen ist, die dazu bestimmt ist, seine Befestigung durch Anschrauben an einem Strukturelement des Fahrzeugs zu ermöglichen.

2. Gehäuse (10) eines Projektors (1) nach Anspruch 1, **dadurch gekennzeichnet, dass** die vertikale Sollbruchstelle (32) aus einer Vielzahl von Verbindungsansätzen (32A) besteht, die voneinander beabstandet und durch Startlöcher (32B) getrennt sind.

3. Gehäuse (10) eines Projektors (1) nach einem der Ansprüche 1 oder 2, **dadurch gekennzeichnet, dass** das Befestigungsloch (36) der vorderen Verankerungslasche (30) in seinem horizontalen distalen Teil (35) vorgesehen ist.

4. Gehäuse (10) eines Projektors (1) nach einem der Ansprüche 1 bis 3, **dadurch gekennzeichnet, dass** die vordere Verankerungslasche (30) mindestens eine Stützrippe in Form eines Quadrats (39) aufweist, die sich entlang einer vertikalen Längsebene zwischen der Unterseite ihres horizontalen distalen Teils (35) und der Rückseite ihres vertikalen proximalen Teils (31) erstreckt.

5. Gehäuse (10) eines Projektors (1) nach einem der Ansprüche 1 bis 4, **dadurch gekennzeichnet, dass** die hintere Verankerungslasche (20) sowie der vertikale proximale (31) und horizontale distale (35) Teil der vorderen Verankerungslasche (30) auf mindestens einer ihrer Flächen mit einem Netz von Versteifungsrippen (25, 33, 34, 38) versehen sind.

6. Gehäuse (10) eines Projektors (1) nach einem der Ansprüche 1 bis 5, **dadurch gekennzeichnet, dass** die Antitranslationsindexierungsmittel einen Stift (22) umfassen, der sich vertikal von der Unterseite der hinteren Verankerungslasche (20) erstreckt und dazu bestimmt ist, durch Einpassen mit einer Öffnung zusammenzuwirken, die in einem Strukturelement des Fahrzeugs vorgesehen ist.

7. Gehäuse (10) eines Projektors (1) nach einem der vorhergehenden Ansprüche, **dadurch gekennzeichnet, dass** der distale Zweig (42) der unteren Verankerungslasche (40) mit dem proximalen Zweig (41) dieser unteren Verankerungslasche (40) durch eine vertikale Sollbruchstelle (44) verbunden ist, die so konfiguriert ist, dass sie bei einer vorbestimmten Längsscherspannung bricht.

8. Scheinwerfer (1) für ein Kraftfahrzeug, umfassend ein Gehäuse (10), das einen offenen, hohlen Hauptkörper (11), mindestens ein in dem Körper (11) untergebrachtes Lichtmodul und ein den Körper verschließendes äußeres Abdeckglas (50) umfasst; **dadurch gekennzeichnet, dass** das Gehäuse einem der Ansprüche 1 bis 7 entspricht.

9. Kraftfahrzeug, **dadurch gekennzeichnet, dass** es mindestens einen Scheinwerfer (1) gemäß Anspruch 8 umfasst.

## Claims

1. Housing (10) of a headlight (1) for a motor vehicle comprising a hollow main body (11) capable of receiving at least one light module and intended to be closed by an external cover glass (50), a rear anchoring lug (20) projecting along a horizontal mean plane at the rear of said body (11) and having a bore (21) for its fixing by screwing to a first structural element of said vehicle as well as anti-translation indexing means by interlocking along a vertical axis (22), and a frangible front anchoring lug (30) projecting from said body (11), on the so-called internal side of this body with reference to the longitudinal axis of the vehicle, and also having a bore (36) for its fixing by screwing to a second structural element (2) of said vehicle, said front anchoring lug (30), in the form of an angle iron, comprising a proximal part (31) extending along a vertical transverse mean plane and being connected by one of its lateral edges to said body (11) via a vertical frangible connection zone (32) configured to break under a predetermined longitudinal shear stress, as well as a distal portion (35) extending rearwardly along a horizontal mean plane from the upper edge of said proximal portion (31), this projector housing further comprising a lower anchoring tab; this projector housing further comprising a lower anchoring tab; the projector housing being **characterized in that** said frangible front anchoring tab (30) has in its distal portion (35) an oblong anti-rotation indexing hole (37) extending horizontally while being oriented in a radial direction (D) to said vertical axis; and **in that** the lower anchoring lug (40) is L-shaped (40) projecting below said body along a vertical mid-plane parallel to said radial direction (D) of the oblong indexing hole (37), this lower anchoring lug (40) comprising a proximal branch (41) of vertical orientation connected by its upper edge to said body (11) as well as a distal branch (42) oriented horizontally and provided with a bore (43) intended to allow its fixing by screwing onto a structural element of said vehicle.

2. Housing (10) of a headlight (1) according to claim 1, **characterized in that** said vertical frangible connection zone (32) is constituted by a plurality of connecting appendages (32A) spaced apart from each other and separated by starter holes (32B).

3. Housing (10) of a headlight (1) according to one of claims 1 or 2, **characterized in that** the fixing hole (36) of said front anchoring lug (30) is formed in its horizontal distal portion (35).

4. Housing (10) of a headlight (1) according to one of claims 1 to 3,
**characterized in that** said front anchoring lug (30) comprises at least one bracket-shaped supporting rib (39) extending along a vertical longitudinal plane between the lower face of its horizontal distal portion (35) and the rear face of its vertical proximal portion (31).

5. Housing (10) for a headlight (1) according to one of claims 1 to 4,
**characterized in that** said rear anchoring lug (20) and the vertical proximal (31) and horizontal distal (35) portions of said front anchoring lug (30) are provided on at least one of their faces with a network of stiffening ribs (25, 33, 34, 38).

6. Housing (10) for a headlight (1) according to one of claims 1 to 5,
**characterized in that** said anti-translation indexing means comprise a pin (22) extending vertically from the lower face of said rear anchoring lug (20) and designed to cooperate by fitting with an orifice provided in a structural element of said vehicle.

7. Housing (10) of a headlight (1) according to one of the preceding claims,
**characterized in that** the distal branch (42) of said lower anchoring lug (40) is connected to the proximal branch (41) of this lower anchoring lug (40) by a vertical frangible connection zone (44) configured to break under a predetermined longitudinal shear stress.

8. Headlight (1) for a motor vehicle, comprising a housing (10) comprising an open hollow main body (11), at least one light module housed in said body (11), and an outer cover glass (50) closing said body; **characterized in that** said housing conforms to one of claims 1 to 7.

9. Motor vehicle **characterized in that** it comprises at least one headlight (1) conforming to claim 8.
